## Europäisches Patentamt

## European Patent Office

(11) Publication number: **0 123 768**

## Office européen des brevets

**B1**

(12) **EUROPEAN PATENT SPECIFICATION**

(45) Date of publication of the patent specification:
**25.02.87**

(51) Int. Cl.⁴: **F 16 L 59/02,** F 16 L 59/14, F 16 L 59/16

(21) Application number: **83850327.4**

(22) Date of filing: **07.12.83**

(54) A method for the external insulation of pipes and pipe components.

(30) Priority: **11.01.83 SE 8300087**

(43) Date of publication of application:
**07.11.84 Bulletin 84/45**

(45) Publication of the grant of the patent:
**25.02.87 Bulletin 87/9**

(84) Designated Contracting States:
**AT BE CH DE FR GB IT LI LU NL**

(56) References cited:
**FR-A-2 477 670**
**US-A-3 935 632**

(73) Proprietor: **LINDAB VENTILATION AB, Grevie, S-269 00 Bastad (SE)**

(72) Inventor: **Lennartsson, Lars Kenneth, Junkersgatan 14, S-260 93 Torekov (SE)**

(74) Representative: **Lenz, Franz, AWAPATENT AB Box 5117, S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

The present invention relates to a method for the external insulation of pipes and pipe components, such as elbows, T-pieces etc., comprising an outer jacket having a shape and a dimension related to the shape of the pipe or pipe component and the thickness of the desired insulation, being centered around the pipe or pipe component.

Pipes and pipe components of, for example, sheet metal are usually insulated in that, after installation, the insulating material is placed around the pipe, whereupon an outer jacket is mounted, if this is required. This work is rather unpleasant because the fibres of the insulating material irritate the skin and the respiratory organs and, furthermore, is time-consuming and therefore contributes materially to an increase in the installation cost. Conceivably, the fibre insulation may be replaced by foamed plastic which is placed around the pipe or pipe component by foaming on site, as shown in FR-A-24 77 670, but this procedure is also expensive and highly injurious to health.

It is the object of this invention to provide a novel method for insulating pipes and pipe components, which is both rational and advantageous from the viewpoint of sanitation. The method according to the invention is characterized in that a member permeable to air but not to insulating material is placed in the space between the pipe or pipe component and the outer jacket at one end thereof; that a negative pressure is applied to the outer side of said member for causing air to flow through the space from the other end of the outer jacket; that an insulating material conveyable by air, such as mineral or glass wool in bulk, is supplied to said other end of the outer jacket to be drawn into the space between the outer jacket and the pipe or pipe component; and that steps are taken to retain the insulating material within the said space.

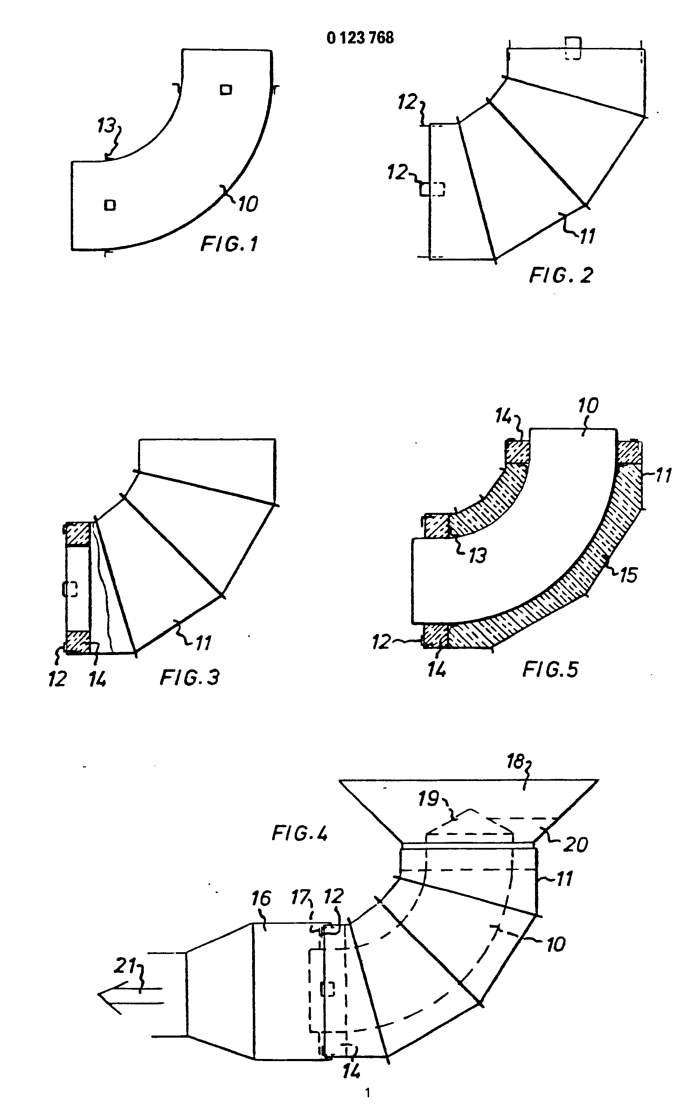

The invention will be described in more detail below, reference being had to the accompanying drawing which illustrates schematically an embodiment. Fig. 1 is a lateral view of an elbow which is to be provided with an insulation according to the invention. Fig. 2 illustrates, also in lateral view, an outer jacket for use with the method according to the invention. Fig. 3 is a lateral view, partly in section, of an air-permeable member mounted in the outer jacket according to Fig. 2. Fig. 4 is a lateral view of the means which are used for mounting an insulation between the pipe and the outer jacket according to Figs. 1 and 2. Fig. 5 is a sectional view of the insulated elbow.

Fig. 1 shows an elbow 10 which, in the present case, consists of sheet metal but which may also be made of plastic material. Fig. 2 shows an outer jacket 11 which is in the form of an elbow and comprises a number of interconnected straight pipe pieces with obliquely cut ends. Tabs 12 are secured by spot welding to the inner side of the outer jacket 11. These tabs are mounted in the straight condition, as is shown to the left in Fig. 2, and are flexible so that they can be bent at right angles to the pipe wall by hand or by means of a simple tool. The elbow 10 is provided on its outer periphery with corresponding tabs 13 which have already been bent at right angles to the pipe wall, as will appear from the drawing. In Fig. 3, an annular member 14 having an outer diameter corresponding to the inner diameter of the outer jacket 11 is inserted in the left end of the outer jacket 11 where it is retained by bending the tabs 12 inwards. The annular member 14 has an inner diameter corresponding to the outer diameter of the elbow 10 which is insertable in the member 14 from the other end of the outer jacket 11, until the bent tabs 13 of the elbow 10 engage the side of the member 14 facing away from the tabs 12. In this manner, the member 14 is held in position in the end of the outer jacket 11, and at the same time the elbow 10 is centered. The elbow 10 and the outer jacket 11 are now ready to receive a layer of insulating material.

To bring the insulating material 15 in position, a negative pressure is applied to the end of the outer jacket 11 in which the member 14 is inserted. For this purpose, a vacuum suction line 16 is pushed over the end of the outer jacket 11. A perforated sheet metal ring 17 preferably is mounted on the outer side of the member 14 and may either be secured in the opening of the vacuum suction line 16 or constitute a separate part which is joined to the jacket end in some suitable manner or secured to the end of the elbow 10 extending through the member 14. The ring 17 may also be in the form of a disc which is perforated around its periphery and with a central whole portion closes the end of the elbow 10. To the other end of the outer jacket a feed hopper 18 is secured which has a central conical portion 14 tightly sealing the end of the elbow 10 and connected to the feed hopper 18 by means of an anchoring member 20. Naturally, the conical portion 19 may also be a separate component which is pushed over the end of the elbow 10.

The device is now ready to receive the insulating material, which is done by establishing a negative pressure in the line 16, as is shown by the arrow 21. Air is now sucked through the hopper 18 and the space between the elbow 10 and the outer jacket 11 and is discharged via the member 14 and the perforated ring 17. A suitable insulating material, preferably glass or mineral wool in bulk, is supplied to the hopper 18 and sucked into the space between the elbow 10 and the outer jacket 11. The conical portion 19 assists in conducting the material down into the said space and, at the same time, prevents air form being sucked into the elbow 10. In the embodiment illustrated, the hopper 18 is open at its upper end, but it will be appreciated that, in actual practice, the insulating material is supplied in a closed system so that no fibres can whirl up into the air. The space is filled very quickly, and the insulating material is compacted in

dependence on the negative pressure applied. When the insulation has reached a predetermined level adjacent the end of the outer jacket 11 carrying the hopper 18, or a predetermined amount of insulating material has been introduced, the supply of insulating material is discontinued, and the hopper 18 is removed. After that, a member 14 of the same type as the one in the other end of the outer jacket 11 is mounted and locked in position by means of the tabs 12, 13, like the member 14 in the other jacket end. In the meantime, the negative pressure can be maintained so that no insulating material will escape from the space between the elbow 10 and the outer jacket 11.

After removal of the suction line 16 and the ring 17, the elbow has the appearance shown in Fig. 5 and is ready for use.

In some cases, no outer jacket 11 is required, and then the insulating material is mixed with a suitable binder, either before the supply to the hopper 18 or in connection therewith. After the binder has set, a self-supporting layer is obtained, for which reason the outer jacket 11 which in this case is divisible, can be removed together with the suction line 16 and the hopper 18 and their accessories. The member 14 in the lower end may be retained or removed. An insulation of this type is more likely to be damaged than an insulation comprising an outer jacket, but for some installations its strength is entirely sufficient.

A binder may also be added when the outer jacket 11 is retained, thereby to improve the strength. In that case, the members 14 can be dispensed with, and on installation the insulating material is compacted against the perforated disc 17 at one end of the pipe component and merely is trimmed up at the other end.

The members 14, if such are used, preferably are secured by means of tabs 12, 13, but it is also conceivable to secure the members 14 by gluing them to the outer periphery of the elbow 10.

The method according to the invention may be used both for straight pipes and for different types of pipe components. In the above description, use is made of a pipe component and an outer jacket of sheet metal, but these may, of course, also be made of plastics.

## Claims

1. A method for the external insulation of pipes and pipe components (10), such as elbows, T-pieces etc., comprising an outer jacket (11) having a shape and a dimension related to the shape of the pipe or pipe component and the thickness of the desired insulation (15), being centered around the pipe or pipe component; characterized in that a member (14) permeable to air but not to insulating material is placed in the space between the pipe or pipe component (10) and the outer jacket (11) at one end thereof; that a negative pressure is applied to the outer side of said member (14) for causing air to flow through the space from the other end of the outer jacket (11): that an insulating material (15) conveyable by air, such as mineral or glass wool in bulk, is supplied to said other end of the outer jacket to be drawn into the space between the outer jacket (11) and the pipe or pipe component (10); and that steps are taken to retain the insulating material (15) within the said space.

2. A method as claimed in claim 1, characterized in that the air-permeable member (14) is a hard insulating disc which is anchored between the pipe or pipe component (10) and the outer jacket (11) by means of tabs (12, 13) or rings mounted thereon, or by gluing, the insulating material (15) being retained in the space by anchoring to the other end of said outer jacket (11) an identical, hard insulating disc (14).

3. A method as claimed in claim 1 or 2, characterized in that the negative pressure is supplied by means of a so-called vacuum suction hose (16) which is tightly secured around the outer periphery of the outer jacket (11) at the said one end thereof, and that the insulating material (15) is supplied by means of a feed hopper (18), the outlet end of which is secured around the other end of said outer jacket (11), while at the same time a conical member (19) is tightly secured in the end of the pipe or pipe component (10) located at the other end of said outer jacket (11) and the hopper outlet end, respectively, thereby to conduct insulating material (15) to the space between said outer jacket (11) and said pipe or pipe component (10), and to prevent air from flowing through the pipe or pipe component (10) and entraining insulating material (15) into said pipe or pipe component (10).

4. A method as claimed in any one of the preceding claims, characterized in that a binder is added to the insulating material prior to or in connection with the supply thereof to the space between said outer jacket (11) and said pipe or pipe component (10), and that the binder is hardened, for instance by supplying heat.

5. A method as claimed in claim 1, in which said outer jacket is divisible in its longitudinal direction, characterized in that the binder is added to the insulating material (15) prior to or in connection with the supply thereof to the space between said outer jacket (11) and said pipe or pipe component (10), that the binder is hardened, for instance by supplying heat, and that said outer jacket (11) and preferably also said air-permeable member (14) are removed after the binder has set.

## Patentansprüche

1. Verfahren zum aussenseitigen Isolieren von Rohren und Rohrteilen (10), beispielsweise Rohrkrümmern, T-Stücken usw., umfassend einen Aussenmantel (11), dessen Form und Abmessung auf die Form des Rohrs oder des Rohrteils sowie die Dicke der erwünschten Isolierung (15) bezogen sind und der rund um das Rohr oder den Rohrteil zentriert ist, dadurch gekennzeichnet, dass ein Luft, jedoch kein Isoliermaterial durchlassendes Glied (14) im Raum zwischen dem Rohr oder dem Rohrteil (10) und dem Aussenmantel (11) an dessen einem Ende angebracht wird; dass auf die Aussenseite dieses Gliedes (14) ein Unterdruck ausgeübt wird, um einen Luftstrom durch den Raum vom anderen Ende des Aussenmantels (11) zu erzeugen; dass ein mittels Luft transportierbares Isoliermaterial (15), beispielsweise lose Mineral- oder Glaswolle, dem anderen Ende des Aussenmantels zugeführt wird, um in den Raum zwischen dem Aussenmantel (11) und dem Rohr oder dem Rohrteil (10) eingezogen zu werden; und dass Massnahmen ergriffen werden, um das Isoliermaterial (15) im genannten Raum zu halten.

2. Verfahren nach Anspruch 1, dadurch gekennzeichnet, dass das luftdurchlässige Glied (14) eine harte Isolierscheibe ist, die zwischen dem Rohr oder dem Rohrteil (10) und dem Aussenmantel (11) mittels darauf befestigter Lappen (12, 13) oder Ringe oder durch Kleben verankert wird, wobei das Isoliermaterial (15) dadurch im Raum gehalten wird, dass am anderen Ende des genannten Aussenmantels (11) eine identische, harte Isolierscheibe (14) verankert wird.

3. Verfahren nach Anspruch 1 oder 2, dadurch gekennzeichnet, dass der Unterdruck mittels eines sog. Vakuumsaugschlauches (16) zugeführt wird, der dicht rund um den Aussenumfang des Aussenmantels (11) an dessen einem Ende befestigt wird, und dass das Isoliermaterial (15) mittels eines Zufuhrtrichters (18) zugeführt wird, dessen Austrittsende rund um das andere Ende des genannten Aussenmantels (11) befestigt wird, während gleichzeitig ein konisches Glied (19) dicht in demjenigen Ende des Rohrs oder Rohrteils (10) befestigt wird, das am anderen Ende des Aussenmantels (11) bzw. am Trichteraustrittsende gelegen ist, um hierdurch Isoliermaterial (15) zum Raum zwischen dem Aussenmantel (11) und dem Rohr oder Rohrteil (10) zu leiten und zu verhindern, dass Luft durch das Rohr oder den Rohrteil (10) strömt und Isoliermaterial (15) in das Rohr oder den Rohrteil (10) mitreisst.

4. Verfahren nach einem der vorhergehenden Ansprüche, dadurch gekennzeichnet, dass dem Isoliermaterial vor oder während seiner Zufuhr zum Raum zwischen dem Aussenmantel (11) und dem Rohr oder Rohrteil (10) ein Bindemittel zugesetzt wird, und dass das Bindemittel gehärtet wird, beispielsweise durch Wärmezufuhr.

5. Verfahren nach Anspruch 1, bei dem der Aussenmantel in seiner Längsrichtung teilbar ist, dadurch gekennzeichnet, dass das Bindemittel dem Isoliermaterial (15) vor oder während seiner Zufuhr zum Raum zwischen dem Aussenmantel (11) und dem Rohr oder dem Rohrteil (10) zugesetzt wird, dass das Bindemittel gehärtet wird, beispielsweise durch Wärmezufuhr, und dass der Aussenmantel (11) und vorzugsweise auch das luftdurchlässige Glied (14) nach dem Härten des Bindemittels entfernt werden.

**Revendications**

1. Procédé pour l'isolation extérieure de tubes et de composants tubulaires (10), tels que des coudes, des raccords en T etc., comportant une jaquette extérieure (11) de forme et de dimension correspondant à la forme du tube ou du composant tubulaire et à l'épaisseur de l'isolation désirée (15), centrée autour du tube ou du composant tubulaire ; caractérisé en ce que l'on place dans l'espace situé entre le tube ou le composant tubulaire (10) et la jaquette extérieure (11), à l'une de ses extrémités, un élément (14) perméable à l'air mais non au matériau isolant ; en ce que l'on applique sur la face extérieure dudit élément (14) une dépression pour faire en sorte que l'air s'écoule à travers cet espace depuis l'autre extrémité de la jaquette extérieure (11) ; en ce que l'on amène un matériau isolant (15), transportable par l'air, comme une laine minérale ou une laine de verre en vrac, à ladite autre extrémité de la jaquette extérieure pour être aspiré dans l'espace situé entre la jaquette extérieure (11) et le tube ou le composant tubulaire (10) ; et en ce que des mesures sont prises pour retenir le matériau isolant (15) à l'intérieur dudit espace.

2. Procédé comme revendiqué dans la revendication 1, caractérisé en ce que l'élément perméable à l'air (14) est un disque isolant dur fixé entre le tube ou le composant tubulaire (10) et la jaquette extérieure (11) au moyen de pattes (12, 13) ou de couronnes montées sur lui, ou par collage, le matériau isolant (15) étant retenu dans l'espace par fixation, à l'autre extrémité de ladite jaquette (11), d'un disque isolant dur identique (14).

3. Procédé comme revendiqué dans la revendication 1 ou 2, caractérisé en ce que l'on crée la dépression au moyen de ce que l'on appelle un tube souple d'aspiration par le vide (16) fixé de façon étanche autour de la periphérie extérieure de la jaquette extérieure (II) à ladite extrémité, mentionnée en premier lieu, de cette jaquette, et en ce que l'on amène le matériau isolant (15) au moyen d'une trémie d'alimentation (18) dont l'extrémité de sortie est fixée autour de l'autre extrémité de ladite jaquette extéerieure (11), tandis qu'en même temps on fixe de façon étanche un élément conique (19) dans l'extrémité du tube ou du composant tubulaire (10) situé à l'autre extrémité de ladite jaquette extérieure (II) et a l'extremite de sortie de la trémie, respectivement, de façon à guider le matériau isolant (15) vers l'espace situé entre ladite jaquette extérieure (II) et ledit tube ou composant tubulaire (10) et à empécher l'air de

s'écouler à travers le tube ou le composant tubulaire (10) et d'entrainer le matériau isolant (15) dans ledit tube ou composant tubulaire (10).

4. Procédé comme revendiqué dans l'une quelconque des revendications précédentes, caractérisé en ce que l'on ajoute un liant au matériau isolant avant son envoi dans l'espace situé entre ladite jaquette extérieure (11) et ledit tube ou composant tubulaire (10), ou en liaison avec cet envoi ; et en ce que l'on fait prendre le liant, par exemple en fournissant de la chaleur.

5. Procédé comme revendiqué dans la revendication 1, dans lequel ladite jaquette extérieure peut se diviser selon sa direction longitudinale, caractérisé en ce que l'on ajoute le liant au matériau isolant (15) avant son envoi dans l'espace situé entre ladite jaquette extérieure (11) et ledit tube ou composant tubulaire (10), ou en liaison avec cet envoi; en ce que l'on fait prendre le liant, par exemple en fournissant de la chaleur; et en ce que l'on enlève ladite jaquette extérieure (11) et de préférence aussi ledit élément perméable à l'air (14) après que le liant a fait prise.

0 123 768

FIG.1

FIG. 2

FIG.3

FIG.4

FIG.5